# EUROPÄISCHE PATENTSCHRIFT

(11) **EP 1 072 131 B1**
(45) Veröffentlichungstag und Bekanntmachung des Hinweises auf die Patenterteilung: **10.08.2005**
(21) Anmeldenummer: 99945701.3
(22) Anmeldetag: 07.04.1999
(51) Int. Cl.: H04L 25/06, H04L 25/03

(54) **VERFAHREN ZUM DEMODULIEREN EINER MIT EINER DIGITALEN SYMBOLFOLGE MODULIERTEN TRÄGERWELLE**
METHOD FOR DEMODULATING A CARRIER WAVE MODULATED BY A DIGITAL SYMBOL SEQUENCE
PROCEDE POUR LA DEMODULATION D'UNE ONDE PORTEUSE MODULEE PAR UNE SEQUENCE DE SYMBOLES NUMERIQUE

(30) Priorität: 08.04.1998 DE 19815701
(43) Veröffentlichungstag der Anmeldung: 31.01.2001
(73) Patentinhaber: ROBERT BOSCH GMBH, 70442 Stuttgart (DE)
(72) Erfinder: CINKLER, Kalman, D-28215 Bremen (DE); KAMMEYER, Karl-Dirk, D-21224 Buchholz (DE)
(86) Internationale Anmeldenummer: PCT/DE1999/001041
(87) Internationale Veröffentlichungsnummer: WO 1999/053659

(56) Entgegenhaltungen:
- EP-A- 0 524 756
- US-A- 5 687 164
- GROSSEKATTHOEFER A: "DETECTION OF CONTINUOUS-PHASE MODULATED (CPM) SIGNALS WITH ARTIFICIAL NEURAL NETWORKS" COMMUNICATIONS: THE KEY TO GLOBAL PROSPERITY. GLOBECOM 1996, Bd. 1, 18. - 22. November 1996, Seiten 185-190, XP000742149 New York (USA)
- FEIZ S ET AL: "MAXIMUM-LIKELIHOOD RECEIVER FOR FOUR-DIMENSIONAL SIGNALING SCHEMES CORRUPTED BY ISI" IEEE TRANSACTIONS ON COMMUNICATIONS, Bd. 40, Nr. 2, 1. Februar 1992 (1992-02-01), Seiten 265-277, XP000255247 New York (USA)

## Beschreibung

Die Erfindung betrifft ein Verfahren zum Demodulieren einer mit einer digitalen Symbolfolge modulierten, über einen rauschbehafteten Kanal übertragenen Trägerwelle, wobei die idealen Flankenformen der möglichen Übergänge zwischen zwei Symbolen bekannt und gespeichert sind (Referenzflanken), und eine empfangene Flanke mit einer Abtastfrequenz abgetastet und digitalisiert wird, die ein Vielfaches der Frequenz der Symbolfolge beträgt.

Zur Übertragung von Datenpaketen wird insbesondere die kontinuierliche Phasenmodulation (CPM) genutzt. Dabei können durch unterschiedliche Phasenlage mehrere, beispielsweise vier, unterschiedliche Symbole übertragen werden. Da die Modulation mit Rechteckimpulsen von jeweils einer Symbollänge zu einem sehr breiten Spektrum führen würde, benutzt man häufig eine Modulation mit Impulsen, die sich über eine Länge von zwei Symboldauern erstrecken, sowie - zur Vermeidung von steilen Flanken - als kosinusförmig darstellen. Eine solche Modulation wird auch als 2RC-CPM bezeichnet.

Aus dem Konferenzbericht
"K.-H. Tietgen "Numerical Modulation Methods Applied in the FD/TDMA System S 900 D", Second Nordic Seminar on Digital Land Mobile Radio Communications, Stockholm, 1986"
ist es bekannt, nicht die Symbole selbst zur Modulation zu verwenden, sondern die bekannten Flanken zwischen zwei aufeinanderfolgenden Symbolen numerisch zu modulieren.

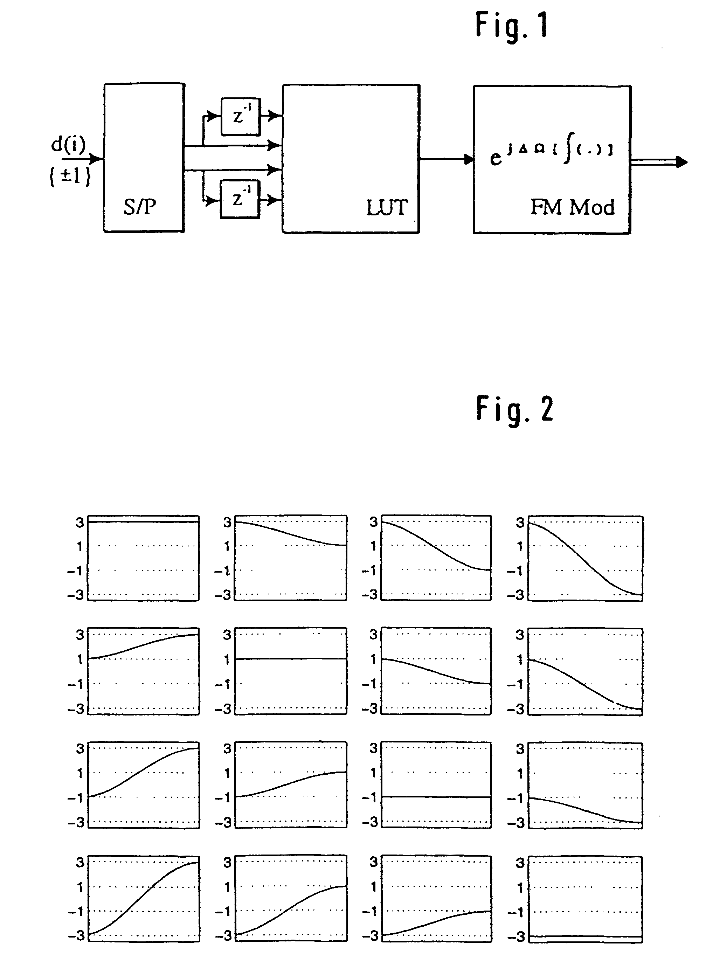

Figur 1 zeigt das Blockschaltbild eines Senders, der geeignet ist, das bekannte Verfahren anzuwenden. Die grau unterlegten Systemteile arbeiten dabei im hohen Systemtakt.

Figur 2 zeigt für ein vierwertiges Symbolalphabet die denkbaren Flanken beim Übergang von jeweils einem Symbol einer zu übertragenden Symbolfolge auf das nächste. Die Idee bei den bekannten Modulationsverfahren ist es also, die Momentanfrequenz (d.h. die nach der Zeit abgeleitete Phase) eines (beispielsweise) vierstufigen Signals bei einer Impulsformung der Länge 2T als Aneinanderreihung von 16 möglichen Flanken f_{N}(t) der Länge T zu beschreiben. Anstatt sich überlappende verschobene Elemtarimpulse Σᵢd(i)g(t - iT) zu senden, kann also auch direkt eine nicht überlappende Folge von Flanken Σᵢf_{N}(t - iT) gesendet werden, wobei jeweils benachbarte Symbole d(i) und d(i + 1) entscheiden, welche der 16 Flanken im Intervall iT ≤ t ≤ (i + 1)T gesendet wird.

Ein solches Verfahren wird in der zitierten Literaturstelle als CP-4FSK bezeichnet. Um einen Vergleich mit anderen Verfahren zu vereinfachen, wird es im folgenden als Num2RC 4st bezeichnet, abgeleitet von einem vierstufigen Verfahren, bei dem numerisch moduliert wird und die Flankenformen auf der Anwendung eines zwei Symbole andauernden "raised cosinus" basieren.

Zum Empfang einer so modulierten Datenfolge ist in dem Seminarbericht
"D.E. Pfitzmann und H.-P. Ketterling "A new CP-4FSK sampling Demodulator for the FD/TDMA System S 900 D", Second Nordic Seminar on Digital Land Mobile Radio Communications, Stockholm, 1986"
ein Empfänger vorgeschlagen worden. Der gleiche Empfänger ist auch aus der DE 36 28 993 C2 bekannt.

Die Arbeitsweise des dort beschriebenen Empfängers ist ein gattungsgemäßes Verfahren. Mit dem dort beschriebenen Empfänger wird eine empfangene Flanke mit einer Abtastfrequenz abgetastet und digitalisiert, die ein vielfaches der Frequenz der Symbolfolge beträgt. In dem beschriebenen Beispiel wird zwischen zwei Symbolen beispielsweise 16 mal abgetastet. Die digitalisierten Werte werden miteinander verglichen und bei geringen Abweichungen zwei aufeinanderfolgender Werte auf eine Symbolmitte geschlossen. Durch Mitteln aufeinanderfolgender Werte wird versucht, einen Rauscheinfluß zu eliminieren.

Klassischen CPM-Empfänger- bzw. Demodulationsverfahren werden auch als "discriminator Integrate & Dump" bezeichnet. Es wird daher im folgenden bei Verwendung einer Signalflankenform des zwei Symbollängen dauernden "raised cosinus" die Bezeichnung 2RCdsI&D verwendet, gegebenenfalls ergänzt um den Zusatz 2st (d.h. zweistufig, zwei Symbole) oder 4st (d.h. vierstufig, vier Symbole).

Generell ist es für einen Empfänger wünschenswert, wenn jedes einzelne Symbol mit großer Sicherheit empfangen wird. Bei klassischen CPM-Empfängerverfahren ist es notwendig, das durch den realen Übertragungskanal verrauschte Signal zu filtern. Übliche Filter arbeiten als Integrator, beispielsweise über zwei Symboldauern, um das Rauschen zu mitteln. Bei den erwähnten 2RC-Signalformen kommt es durch die Integration zu Intersymbol-Interferenzen, abgekürzt ISI. Zur Vermeidung von Intersymbol-Interferenzen ist es bekannt, ein Viterbi-Algorithmus auf die empfangene Symbolfolge anzuwenden. Nachteilig ist hierbei der hohe Rechenaufwand, der entsprechend große Anforderungen an die Hardware stellt.

Der Erfindung liegt daher die Aufgabe zugrunde, ein Demodulationsverfahren anzugeben, bei dem ausgehend von einem gattungsgemäßen Verfahren geringer Rechenaufwand bei möglichst gleich guter Fehlerrate ermöglicht wird. Auf diese Weise soll der konstruktive Aufwand für einen Empfänger vereinfacht werden, ohne daß die Vorteile der "Continuous Phase Modulation" (CPM), wie niedrige Komplexität und ein kompaktes Spektrum, das wie bereits erwähnt, im Hinblick auf eine gute Bandbreitennutzung von entscheidender Bedeutung ist, aufgegeben werden.

Die Lösung der Aufgabe ist erfindungsgemäß dadurch gekennzeichnet, daß zur Detektion einer empfangenen und abgetasteten Flanke sämtliche Abtastwerte zur Bildung von jeweils euklidischen Distanzen zu zumindest zwei Referenzflanken verwandt werden und die Referenzflanke mit der niedrigsten euklidischen Distanz ausgewählt wird.

Im Vergleich zu den beschriebenen klassischen Empfängern steht bei einem solchen Demodulationsverfahren statt der zu schätzenden Symbole die Übergangsflanken zwischen diesen Symbolen im Mittelpunkt der Detektion. Diese Flanken werden mehrfach überabgetastet und mit den ursprünglichen Flanken verglichen. Anschließend erfolgt eine Entscheidung zu Gunsten derjenigen Flanke, deren Entfernung im euklidischen Sinne von der empfangenen die geringste ist. Diese Entscheidung erfolgt flankenweise unabhängig von benachbarten Flanken, daher gewährleistet die Entscheidungs-Hypothese nicht notwendig die Kontinuierlichkeit der Ableitung der Phase des CPM-Signals.

Bevorzugt ist daher eine erfinderische Weiterbildung, bei der eine kontinuierliche Phase vorliegt.

Erfindungsgemäß ist daher bevorzugt vorgesehen, daß auf eine Anzahl aufeinander folgender Flanken ein Viterbi-Algorithmus angewandt wird, wobei die jeweiligen euklidischen Distanzen der in einer Symboldauer empfangenen Flanke von den Referenzflanken als Kosten eines Trelliszweiges des Viterbi-Algorithmus behandelt werden.

Die Eigenschaften der CPM-Modulation ermöglichen es also, eine Entzerrung des Datensignales sehr effizient durchzuführen.

Die vorgeschlagene Maximum-Likelihood-Schätzung der empfangenen Datenfolgen durch Anwendung eines Viterbi-Algorithmusses nicht auf die Symbolfolgen, sondern auf die empfangenen Flanken, führt dazu, daß ein Modell verwendet werden kann, dessen Anzahl von Zuständen gegenüber dem klassischen Entzerrer um den Faktor M kleiner ist. Dabei bezeichnet M die Stufigkeit des Signals. Daher kann der erforderliche Rechenaufwand niedrig gehalten werden, wodurch die Attraktivität der Hardware-Implementierung, wie im folgenden noch beschrieben, ansteigt.

Die Erfindung wird im folgenden anhand der Zeichnung näher erläutert. In der Zeichnung zeigen:
- Figur 1 -: das Blockschaltbild eines Senders mit numerischer Modulation einer digitalen Symbolfolge auf eine Trägerwelle,
- Figur 2 -: eine Darstellung der denkbaren Flanken zwischen zwei aufeinanderfolgenden Symbolen bei Verwendung eines 2RC-Impulses und einem vierstufigen Symbol-alphabet (Num2RC 4st),
- Figur 3 -: ein Blockschaltbild eines erfindungsgemäßen Empfängers,
- Figur 4 -: eine Tabelle analog Figur 2 für eine zweistufige Modulation,
- Figur 5 -: eine Darstellung einer Referenzflanke, einer tatsächlich empfangenen Flanke sowie eines Trellis-Segmentes mit zugeordneten Kosten,
- Figur 6 -: eine SER-Kurve (Symbol Error Rate; Symbolfehlerrate) für die zweistufige Num2RC ohne und mit Viterbi-Detektion,
- Figur 7 -: eine Gegenüberstellung gemäß Figur 6 für die vierstufige Num2RC mit und ohne Viterbi-Detektion,
- Figur 8 -: einen Vergleich für den zweistufigen Fall des erfindungsgemäßen Verfahrens mit Viterbi-Detektion der Flanken und eines klassischen CPM-Demodulationsverfahrens (Integrate & Dump), und
- Figur 9 -: eine Gegenüberstellung gemäß Figur 8 für den vierstufigen Fall.

Figur 1 zeigt einen an sich bekannten Sender für die numerische Modulation einer digitalen Symbolfolge. Das Basisbandmodell des Senders besteht aus einem Seriell-Parallel-Wandler (S/P) einer Look-Up-Tabelle (LUT), in der im wesentlichen der Inhalt von Figur 2 gespeichert ist, und einem Basisband-FM-Modulator.

Das vierstufige Signal wird aus dem Eingangs-Bitstrom durch das Zusammenfassen von jeweils zwei Bit gewonnen. Durch eine Verzögerung um eine Symboldauer adressieren dann insgesamt vier Bits die in Figur 1 dargestellte LUT, die die in Figur 2 dargestellten 16 Symbolübergänge f_{N}(t) enthält. Die Anzahl der Stützwerte ist frei wählbar, im in der Beschreibung genannten Stand der Technik werden 16 vorgeschlagen. Diese Anzahl ist ein Kompromiß, da einerseits eine hohe Anzahl der Stützwerte erwünscht ist, um eine gute Rauschmittlung zu erreichen, andererseits aber eine niedrige Anzahl den Rechenaufwand gering hält. Grau unterlegt sind die Teile des Senders, die im hohen Systemtakt arbeiten.

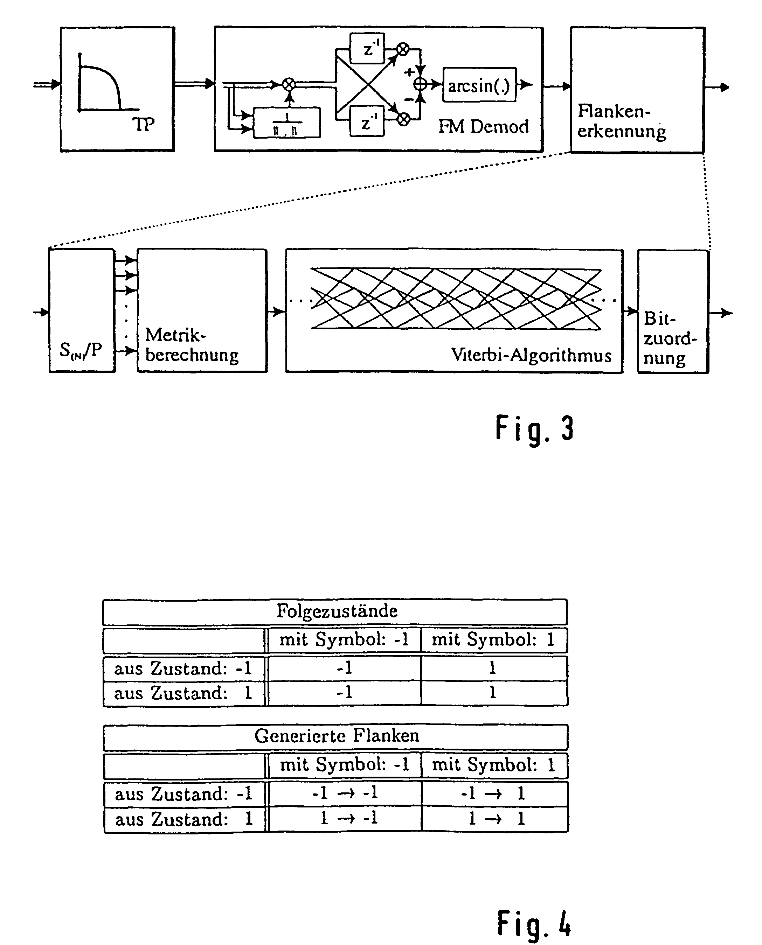

Figur 3 zeigt den erfindungsgemäßen Empfänger.

Das Basisbandmodell besteht aus einem bandbegrenzenden Tiefpaß TP, einem Basisband-FM-Demodulator mit Parasit-AM-Unterdrückung, einem Flankendetektor und einem Parallel-Seriell-Wandler (P/S). Die Teile des Empfängers, die im hohen Systemtakt arbeiten, sind wiederum grau unterlegt.

Im Flankendetektor erfolgt flankenweise erfindungsgemäß die Bestimmung derjenigen Flanke, die mit der größten Wahrscheinlichkeit der gesendeten Flanke entspricht.

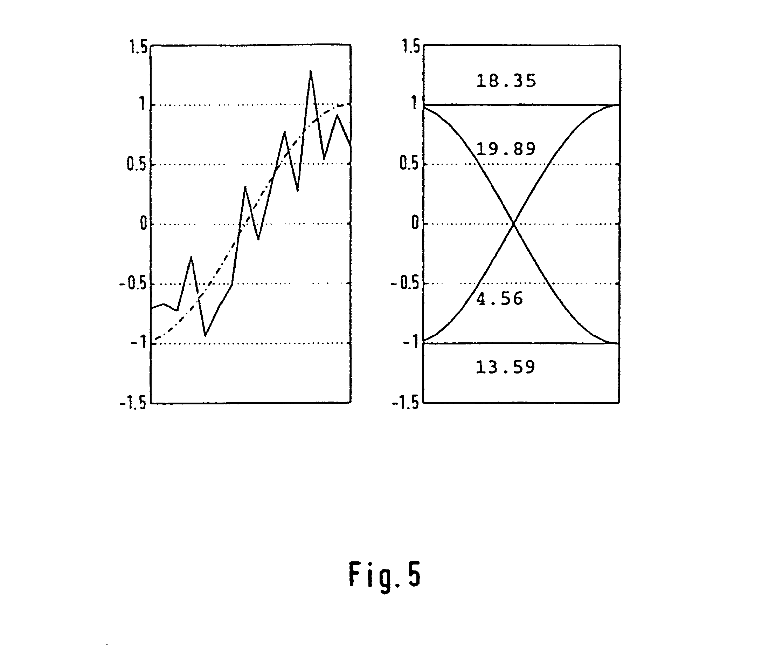

Figur 4 zeigt in Form einer Tabelle den zweistufigen Fall an denkbaren Flanken, der für die Betrachtung in Figur 5 zugrunde gelegt wird. Die Erweiterung auf den vierstufigen oder einen noch höherstufigen Fall verläuft analog ohne Beschränkung der Allgemeinheit.

Figur 5 zeigt im linken Diagramm in durchgezogener Linie eine empfangene, verrauschte Flanke und strichpunktiert eine der Referenzflanken gemäß Figur 4 (Num2RC 2st). Die pro Flanke ermittelten (beispielsweise) 16 Werte werden erfindungsgemäß verwendet, um die Summe der quadratischen Differenzen zu bilden (euklidische Differenz). Anhand der kleinsten euklidischen Differenz (rechte Seite in Figur 5) wird die Referenzflanke identifiziert, die mit größter Wahrscheinlichkeit der gesendeten Flanke entspricht. Jede einzelne detektierte Flanke bestimmt jeweils zwei Datensymbole: Das Ausgangs- und das Endsymbol.

Gemäß einer bevorzugten Ausführungsform der Erfindung ist vorgesehen, die Stetigkeit der detektierten Symbolübergänge mit einem Maximum-Likelihood-Sequence-Estimator sicherzustellen (d.h. vorzugsweise mit einem Viterbi-Algorithmus. Erfindungsgemäß werden daher als Kosten für den Viterbi-Algorithmus die Distanzen der empfangenen Flanke zu allen gültigen Referenzflanken benutzt, so wie dies in Figur 5 auf der rechten Seite anhand eines Trellis-Segmentes dargestellt ist. Der Viterbi-Detektor benutzt die folgenden Parameter: Die Trellistiefe entspricht der Stufigkeit M des Signals (2RC-Impulsformung: Gedächtnis der Länge eines Symboldauer), die Anzahl der Transitionen beträgt M². Die Pfadvereinigungslänge sollte hiernach zu ≥ 5 Symbole gewählt werden.

Zur Veranschaulichung der Vorgänge wird die folgende Beschreibung ohne Einschränkung der Allgemeinheit auf den zweistufigen Fall begrenzt.

Die Zustandsübergänge und die dabei generierten Flanken sind in der Tabelle gemäß Figur 4 dargestellt. Die Berechnung der Summenpfadkosten erfolgt auf die gewohnte Weise: In jedem aktuellen Zustand werden die Pfadkosten aus den Kostenbeiträgen der Äste des Trellis-Diagramms, die zu diesem Zustand führen, und deren Ursprung berechnet. Es wird das Minimum bestimmt und dem zugrunde liegenden Ast gespeichert. Die Kostenbeiträge der einzelnen Äste eines Trellis-Segmentes berechnen sich - wie bereits ausgeführt - als Distanzen der aktuellen empfangenen und verrauschten Flanke zu den entsprechenden Flanken, die von dem Modell bestimmt werden.

Die Distanzen der empfangenen Flanke zu den möglichen Flanken werden bevorzugt als Summe der quadratischen Abstände (euklidische Distanz) berechnet. Es ist jedoch auch denkbar, die Summe der absoluten Abstände oder auch eine andere geeignet Kalibrierung zu verwenden.

Die Berechnung der Kostenbeiträge einer Flanke wird an einem Zahlenbeispiel erläutert. Figur 5 zeigt eine -1 - 1 Flanke gemäß Tabelle Figur 4, die in Folge von Störungen verzerrt ist. Die Distanzen zu allen möglichen Referenzflanken sind an den entsprechenden Flanken eingetragen, und so stellt die rechte Bildhälfte das zu dieser empfangenen Flanke gehörende Trellis-Segment dar. Die "Entfernung" der empfangenen Flanke ist von der -1 - 1 Flanke am geringsten, und daher stellt in diesem Trellis-Segment dies den günstigen Ast dar.

Nach dem Durchlauf aller Trellis-Segmente erfolgt die Entscheidung für einen Pfad in der Trellis-Struktur wie gewohnt: Es wird der Pfad mit den minimalen Kosten ausgewählt, d.h. der Pfad, der der empfangenen Flankenfolge am nächsten ist. Aus dem entschiedenen Pfad sind dann die Symbole mit Hilfe des Modells zu gewinnen. Der Unterschied zu bekannten Viterbi-Algorithmen ist darin zu sehen, daß der Viterbi-Algorithmus nicht auf eine Symbolfolge, sondern auf eine Flankenfolge angewandt wird. Durch die systemimmanente Redundanz, die darin begründet liegt, daß zwei benachbarte Flanken jeweils ein Symbol gemeinsam haben, wird der Rechenaufwand deutlich verringert. Bei der Verwendung eines klassischen Viterbi-Entzerrers kann bei Anwendung auf Symbolfolgen zwar auch die ISI (Intersymbol-Interferenz) eliminiert werden, jedoch erhöht sich die zu berücksichtigende Gedächtnislänge auf zwei Symboldauern, was eine M-fache Erhöhung der Anzahl der Zustände und dadurch eine drastische Erhöhung des Rechenaufwandes mit sich zieht. Im Gegensatz hierzu wird der Rechenaufwand beim erfindungsgemäßen Verfahren bzw. Num2RC-Empfänger um den Faktor M geringer.

Im vierstufigen Fall ist beispielsweise bei der erfindungsgemäßen Num2RC-Demodulation mit Viterbi-Detektion im Vergleich zum klassischen CPM-Empfangsverfahren nur ein Viertel des Rechenaufwandes notwendig.

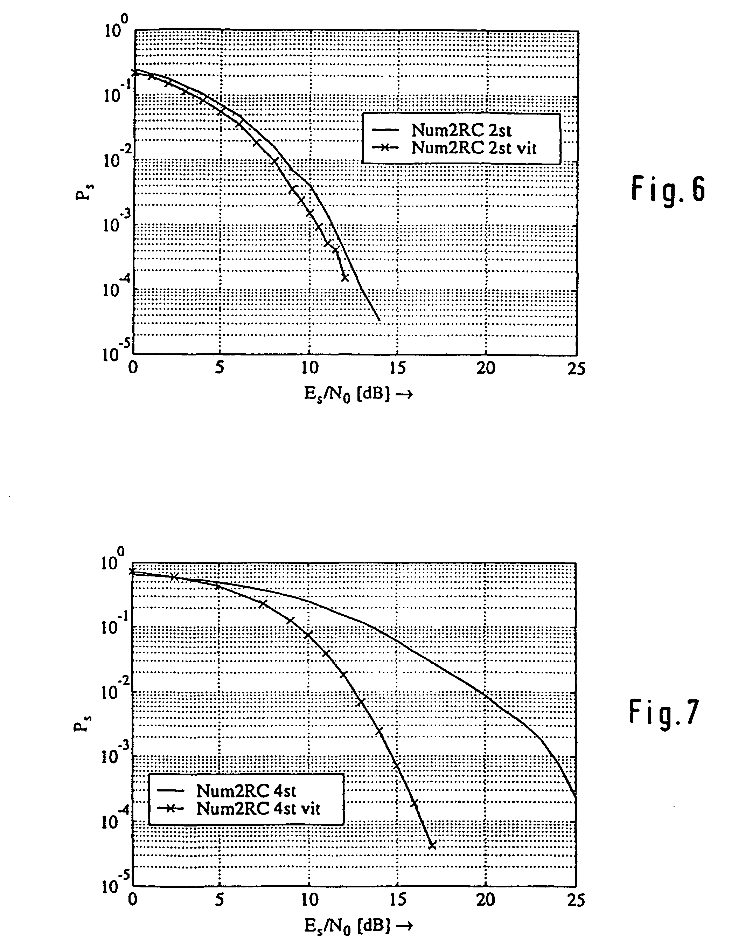

Die Figur 6 bis 9 zeigen die Vorteile, die durch das erfindungsgemäße Verfahren ermöglicht werden.

Figur 6 zeigt eine Gegenüberstellung des erfindungsgemäßen Demodulationsverfahrens (Num2RC 2st) gegenüber demselben Verfahren mit zusätzlicher Anwendung eines Viterbi-Algorithmus auf Flankenfolgen gemäß Figur 5 (Num2RC 2st vit).

Figur 7 zeigt eine analoge Gegenüberstellung für den vierstufigen Fall. An der Hochachse ist jeweils die Fehlerrate aufgetragen (SER, Symbol Error Rate).

Der Vergleich von Figur 6 und Figur 7 zeigt, daß bereits im vierstufigen Fall eine deutliche Absenkung der Fehlerrate zu beobachten ist.

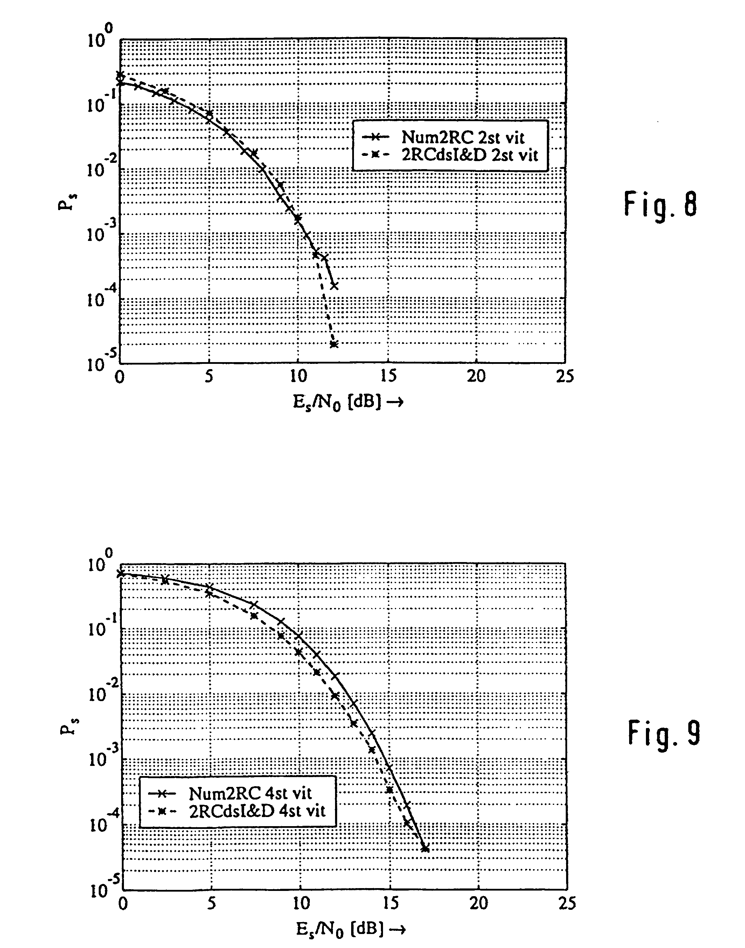

Die Figuren 8 und 9 zeigen einen Vergleich des erfindungsgemäßen Verfahrens mit zusätzlicher Viterbi-Detektion der empfangenen Flanken mit einem klassischen CPM-Demodulationsverfahren, bei dem eine Integration über ein Symbolintervall ausgeführt wird, d.h. das sogenannte "Integrate & Dump", um eine Mittlung über das Kanalrauschen zu erreichen, wobei auf die ermittelten Symbole zusätzlich ein Viterbi-Algorithmus angewandt wird, um die wahrscheinlichste Symbolfolge zu identifizieren und so Intersymbol-Interferenzen zu verringern.

Die Figuren zeigen, daß die Fehlerrate des erfindungsgemäßen Verfahrens sowohl im zweistufigen wie auch im vierstufigen Fall geringfügig schlechter ist. Dabei ist jedoch zu berücksichtigen, daß beim zweistufigen Fall gemäß Figur 8 der Rechenaufwand lediglich die Hälfte beträgt, während beim vierstufigen Fall gemäß Figur 9 lediglich ein Viertel des Rechenaufwandes notwendig ist.

Insbesondere im vierstufigen Fall ist daher die Konstruktion von Empfänger unter Verwendung eines erfindungsgemäßen Verfahrens möglich, die mit wesentlich geringerem Hardware-Aufwand auskommen und daher preisgünstiger zu produzieren sind.

## Patentansprüche

1. Verfahren zum Demodulieren einer mit einer digitalen Symbolfolge modulierten, über einen rauschbehafteten Kanal übertragenen Trägerwelle, wobei die idealen Flankenformen der möglichen Übergänge zwischen zwei Symbolen bekannt und als Referenzflanken gespeichert sind, und eine empfangene Flanke mit einer Abtastfrequenz abgetastet und digitalisiert wird, die ein Vielfaches der Frequenz der Symbolfolge beträgt, **dadurch gekennzeichnet, daß** zur Detektion einer empfangenen und abgetasteten Flanke sämtliche Abtastwerte zur Bildung von jeweils euklidischen Distanzen zu zumindest zwei Referenzflanken verwandt werden und die Referenzflanke mit der niedrigsten euklidischen Distanz ausgewählt wird.

2. Verfahren nach Anspruch 1, **dadurch gekennzeichnet, daß** auf eine Anzahl aufeinander folgender Flanken ein Viterbi-Algorithmus angewandt wird, wobei die jeweiligen euklidischen Distanzen der in einer Symboldauer empfangenen Flanke von den Referenzflanken als Kosten eines Trelliszweiges des Viterbi-Algorithmus behandelt werden.

3. Verfahren nach Anspruch 1 oder 2, **dadurch gekennzeichnet, daß** bei einer Abtastfrequenz von n/T und einer Stufigkeit des Signals von M die Referenzflanken durch insgesamt nM² abgespeicherte Werte beschrieben sind.

4. Verfahren nach einem der vorhergehenden Ansprüche, **dadurch gekennzeichnet, daß** die Modulation als CPM, stetige Phasenmodulation, erfolgt.

5. Verfahren nach Anspruch 4, **dadurch gekennzeichnet, daß** die Modulation eine numerische Bildung der Ableitung und der Phase eines über zwei Symboldauern sich erstreckenden Cosinussignals umfaßt.

6. Verfahren nach einem der vorhergehenden Ansprüche, **dadurch gekennzeichnet, daß** die Trellis-Tiefe des Viterbi-Algorithmus der Stufigkeit M des Signals entspricht.

## Claims

1. Method for demodulating a carrier wave which is modulated with a digital symbol sequence and is transmitted via a noisy channel, in which case the ideal edge shapes of the possible transitions between two symbols are known and are stored as reference edges, and a received edge is sampled and digitized at a sampling frequency which is a multiple of the frequency of the symbol sequence, **characterized in that** in order to detect a received and sampled edge, all the samples are each used to form Euclidean distances to at least two reference edges, and the reference edge which is chosen is that which has the shortest Euclidean distance.

2. Method according to Claim 1, **characterized in that** a Viterbi algorithm is applied to a number of successive edges, in which case the respective Euclidean distances between the edge received in one symbol period and the reference edges are regarded as costs of a trellis branch of the Viterbi algorithm.

3. Method according to Claim 1 or 2, **characterized in that** if the sampling frequency is n/T and the signal has a number of steps M the reference edges are described by a total of nM² stored values.

4. Method according to one of the preceding claims, **characterized in that** CPM, continuous phase modulation, is used.

5. Method according to Claim 4, **characterized in that** the modulation comprises a numerical formation of the derivative and of the phase of a cosine signal which extends over two symbol periods.

6. Method according to one of the preceding claims, **characterized in that** the trellis depth of the Viterbi algorithm corresponds to the number of steps M in the signal.

## Revendications

1. Procédé pour démoduler une onde porteuse modulée à l'aide d'une succession de symboles numériques et transmise sur un canal entaché de bruit, d'après lequel les formes de flanc idéales des transitions possibles entre deux symboles sont connues et sont mémorisées sous forme de flancs de référence, et
un flanc reçu est balayé à l'aide d'une fréquence de balayage qui consiste en un multiple de la fréquence de la succession de symboles et le flanc est numérisé,
**caractérisé en ce que**
pour détecter un flanc reçu et balayé, toutes les valeurs de balayage sont utilisées pour déterminer chacune des distances euclidiennes par rapport à au moins deux flancs de référence, et
le flanc de référence choisi est celui par rapport auquel la distance euclidienne est la plus faible.

2. Procédé selon la revendication 1,
**caractérisé en ce que**
on utilise sur un nombre de flancs successifs un algorithme de Viterbi, chacune des distances euclidiennes - par rapport aux flancs de référence - des flancs reçus pendant une durée de symbole est traitée sous forme de coûts d'une ramification en treillis de l'algorithme de Viterbi.

3. Procédé selon la revendication 1 ou 2,
**caractérisé en ce que**
lorsque la fréquence de balayage est n/T et le niveau du signal est M, les flancs de référence sont décrits par nM² valeurs mémorisées au total.

4. Procédé selon l'une des revendications précédentes,
**caractérisé en ce que**
la modulation est une modulation en phase continue CPM.

5. Procédé selon la revendication 4,
**caractérisé en ce que**
la modulation comprend une formation numérique de la dérivée et de la phase d'un signal en cosinus qui s'étend sur deux durées de symbole.

6. Procédé selon l'une des revendications précédentes,
**caractérisé en ce que**
la profondeur de treillis de l'algorithme de Viterbi correspond au niveau M du signal.
